# FASCICULE DE BREVET EUROPEEN

(11) **EP 0 781 603 B1**
(45) Date de publication et mention de la délivrance du brevet: **03.04.2002**
(21) Numéro de dépôt: 96402690.0
(22) Date de dépôt: 11.12.1996
(51) Int. Cl.: B01J 23/89, B01J 23/34

(54) **Procédé de combustion catalytique à plusieurs zones catalytiques successives**
Katalytisches Verbrennungsverfahren mit mehreren aufeinanderfolgenden Bereichen
Catalytic combustion process with several successive sections

(30) Priorité: 28.12.1995 FR 9515625
(43) Date de publication de la demande: 02.07.1997
(73) Titulaire: INSTITUT FRANCAIS DU PETROLE, 92502 Rueil-Malmaison (FR)
(72) Inventeur: Euzen, Patrick, 92500 Rueil Malmaison (FR); Le Gal, Jean-Hervé, 75014 Paris (FR); Martin, Gérard, 92500 Rueil Malmaison (FR)

(56) Documents cités:
- EP-A- 0 044 117
- EP-A- 0 089 199
- EP-A- 0 125 565
- EP-A- 0 270 203
- EP-A- 0 326 845
- EP-A- 0 689 870
- US-A- 4 857 499

## Description

La présente invention concerne un procédé de combustion catalytique comprenant la mise en oeuvre de plusieurs zones catalytiques successives.

La combustion conventionnelle, réalisée en présence d'une flamme, habituellement utilisée dans les procédés de combustion d'hydrocarbures, tels que le gaz naturel, est un processus difficilement contrôlable. Elle se produit dans un domaine de concentrations air/hydrocarbure bien déterminé et conduit, outre à la formation de dioxyde de carbone et d'eau, à la production de polluants tels que le monoxyde de carbone et les oxydes d'azote.

En raison de la sévérisation accélérée des contraintes environnementales sur les polluants (oxydes d'azote, hydrocarbures imbrûlés, monoxyde de carbone) émis par les procédés de combustion, il devient nécessaire de trouver de nouvelles technologies permettant de diminuer fortement les émissions de ceux-ci. Plusieurs solutions conventionnelles sont bien connues de l'homme de l'art.:
- La réduction sélective des gaz d'échappement (en abrégé S.C.R. pour Selective Catalytic Reduction). La réduction sélective des oxydes d'azote par l'ammoniaque permet de réduire les teneurs en NOₓ à environ 10 ppm. Mais cette solution nécessite la mise en place d'un réacteur particulier, le stockage et l'utilisation d'ammoniaque ; les frais d'installation et de fonctionnement d'un SCR sont donc élevés.
- L'injection d'eau ou de vapeur d'eau. Une telle injection abaisse la température atteinte par les gaz de combustion réduisant ainsi de façon significative les teneurs en NOₓ à environ 50 ppm. Le coût de l'addition d'un tel dispositif est faible. Mais, les coûts de fonctionnement d'une telle installation sont élevées en raison de la purification de l'eau préalable à l'injection et de la surconsommation de combustible due à un abaissement du rendement énergétique. En outre, si l'injection d'eau suffit pour passer les normes actuelles, elle ne permettra pas de satisfaire aux normes futures sur les NOₓ.
- Une zone primaire à mélange pauvre. Cette technologie repose sur l'amélioration de l'homogénéité du mélange air/combustible. Elle permet de faire chuter les émissions de NOₓ à environ 50 ppm, mais cette diminution se fait au détriment des émissions de monoxyde de carbone et d'hydrocarbure imbrûlés, qui se trouvent accrues.

La combustion catalytique est une solution séduisante pour répondre à la sévérisation croissante des normes sur les polluants. En effet, la chambre de combustion catalytique remplace avantageusement les brûleurs conventionnels, car elle autorise un meilleur contrôle de l'oxydation totale dans un large domaine des valeurs du rapport air/hydrocarbure, réduisant ainsi fortement les émissions des d'oxydes d'azote, d'hydrocarbures imbrûlés et de monoxyde de carbone. On peut également mentionner qu'elle permet de brûler une très grande variété de composés.

Ainsi que le décrivent notamment D.Reay dans "Catalytic Combustion : Current Status and Implications for Energy Efficiency in the Process Industries. Heat Recovery Systems & CHP, 13. n°5, pp 383-390, 1993" et D. Jones et S.Salfati dans "Rev. Gén. Therm. Fr. n°330-331, pp 401-406, Juin-Juillet 1989", les applications de la combustion catalytique sont multiples : panneaux et tubes radiants, réchauds catalytiques, turbines à gaz, cogénération, brûleurs, manchons catalytiques pour tubes de vapo-reformage, production de gaz chauds dans le domaine du chauffage par contact direct et réacteurs à plaques catalytiques.

Concernant les procédés de combustion catalytique dans les domaines de la production d'énergie et de la cogénération, la configuration de réacteur la plus répandue est un réacteur comportant plusieurs zones catalytiques: le(s) catalyseur(s) d'entrée étant plus spécifiquement dédié à l'amorçage de la réaction de combustion, les suivants servant à stabiliser la réaction de combustion à haute température ; le nombre d'étages (ou de zones) catalytiques étant ajusté en fonction des conditions imposées par l'application envisagée.

Les catalyseurs de combustion sont généralement préparés à partir d'un substrat monolithique, en céramique ou en métal, sur lequel on dépose une fine couche de support constituée d'un ou plusieurs oxydes réfractaires de surface et de porosité supérieures à celles du substrat monolithique. Sur cet oxyde est dispersée la phase active composée essentiellement des métaux du groupe du platine.

Ainsi qu'il est connu de l'homme de l'art, les métaux du groupe du platine présentent la plus haute activité catalytique pour l'oxydation des hydrocarbures et amorcent donc la combustion à plus basse température que les oxydes des métaux de transition. Ils sont donc utilisés de façon préférée dans les premières zones catalytiques. Toutefois, en raison des températures élevées atteintes soit lors des phases de démarrage ou soit en régime établi, ces catalyseurs subissent une dégradation qui fait chuter leurs performances catalytiques. Le frittage du support à base d'alumine ainsi que le frittage de la phase métallique active et/ou son encapsulation par le support font partie des causes les plus couramment citées pour expliquer cette dégradation.

Il est connu que l'on peut stabiliser efficacement la chute de surface spécifique des supports à base d'alumine par un dopant approprié. Les terres rares et la silice sont souvent cités parmi les stabilisants les plus performants de l'alumine. Les catalyseurs préparés par cette technique sont décrits entre autres dans le brevet US-A- 4 220 559. Dans ce document, le catalyseur comprend des métaux du groupe du platine ou des métaux de transition déposés sur de l'alumine, un oxyde d'un métal choisi dans le groupe constitué par le baryum, le lanthane et le strontium et un oxyde d'un métal choisi dans le groupe constitué par l'étain, le silicium, le zirconium et le molybdène.

En outre, afin de limiter le frittage de la phase métallique active, il a été proposé d'ajouter divers stabilisants à base essentiellement d'oxydes de métaux de transition.

Ainsi, dans le brevet américain US-A- 4 857 499, le catalyseur comprend un support poreux dont le diamètre des pores est compris entre 150 et 300 Å et dont la proportion en poids rapporté au substrat est de façon préférentielle comprise entre 50 et 200g/l, une phase active incluant au moins 10% en poids, rapporté au support poreux, d'un métal précieux choisi dans le groupe formé par le palladium et le platine; un premier promoteur incluant au moins un élément choisi dans le groupe constitué par le lanthane, le cérium, le praséodyme, le néodyme, le baryum, le strontium, le calcium et leurs oxydes, dont la proportion en poids rapporté au support poreux est comprise entre 5 et 20%; un deuxième promoteur incluant au moins un élément choisi dans le groupe formé par le magnésium, le silicium et leurs oxydes, dont la proportion en poids rapportée à la phase active est inférieure ou égale à 10%; et un troisième promoteur incluant au moins un élément choisi dans le groupe constitué par le nickel, le zirconium, le cobalt, le fer et le manganèse et leurs oxydes, dont la proportion en poids rapportée à la phase active est inférieure ou égale à 10%. En outre, ledit catalyseur peut être déposé sur un substrat monolithique appartenant au groupe formé par la cordierite, la mullite, l'alumine alpha, la zircone et l'oxyde de titane ; la proportion en poids de support poreux rapporté au volume de substrat étant comprise entre 50 et 200 g/l.

Dans le brevet américain US - A - 4 793 797, le catalyseur comprend un support inorganique choisi dans le groupe constitué par les oxydes, les carbures et les nitrures d'éléments appartenant aux groupes IIa, IIIa et IV de la classification périodique des éléments, ou choisi dans le groupe constitué par La-β-Al₂O₃, Nd-β-Al₂O₃, Ce-β-Al₂O₃ ou Pr-β-Al₂O₃, au moins un métal précieux choisi dans le groupe constitué par le palladium, le platine, le rhodium et le rethénium, et au moins un oxyde d'un métal de base sélectionné dans le groupe constitué par le magnésium, le manganèse, le cobalt, le nickel, le strontium, le niobium, le zinc, l'étain, le chrome et le zirconium, tel que le rapport atomique du métal de base sur le métal précieux soit compris entre 0,1 et 10.

Par ailleurs, s'agissant des formulations pouvant travailler à haute température, les oxydes mixtes sont généralement plus résistants que les métaux précieux. Parmi les oxydes, les pérovskites et plus particulièrement LaMnO₃, LaCoO₃ et La₁₋ₓSrₓMnO₃ où 0 ≤ x ≤ 0,2 sont intéressants pour l'oxydation catalytique des hydrocarbures, mais leur surface chute rapidement lorsque la température dépasse 800°C. H.Arai et al. ont proposé des formulations à base d'hexaaluminates contenant du manganèse, présentant un bon compromis activité catalytique/stabilité thermique ainsi que décrit, notamment, dans le brevet américain US-A- 4 788 174. Le catalyseur de combustion catalytique proposé peut être représenté par la formule : A_{1-z}C_{z}BₓAl_{12-y}O_{19-α}, dans laquelle
A est au moins un élément choisi dans le groupe formé par Ba, Ca et Sr avec (0,0≤ z ≤0,4);
B est au moins un élément choisi dans le groupe formé par Mn,Fe,Co,Ni,Cu et Cr avec (x≤ y ≤2x);
C est K et/ou Rb; et
α = 1-1/2 {X-z (X-Y) + xZ―3Y} où X, Y, Z représentent respectivement les valences des éléments A, C et B.

H.Arai et al. ont également proposé d'ajouter un métal précieux à de tels catalyseurs, ainsi que décrit, notamment, dans le brevet américain US-A- 4 959 339. Le catalyseur ainsi proposé est représenté par la formule:
A_{1-z}C_{z}BₓDᵤAl_{12-y-u}O_{19-α} dans laquelle
A est au moins un élément choisi dans le groupe formé par Ba, Ca et Sr avec (0,0≤ z ≤0,4);
B est au moins un élément choisi dans le groupe formé par Mn, Fe, Co, Ni, Cu et Cr avec (x≤ y ≤2x);
C est au moins un élément choisi dans le groupe formé par K, Rb et les terres rares;
D est au moins un élément choisi dans le groupe formé par Au, Ag, Pd, Pt et autre métal précieux du groupe du platine avec x+u≤4; et
α = 1-1/2 {X-z (X-Y) + xZ + uU-3y- 3u} où X, Y, Z et U représentent respectivement les valences des éléments A, C, B et D.

Parmi les brevets particulièrement représentatifs des réacteurs de combustion à plusieurs zones catalytiques, on peut citer notamment :
- la demande de brevet européen EP-A-198 948 qui utilise :
   en 1^{ère} zone catalytique : Pd et Pt et NiO ; et
   en 2^{ème} zone catalytique : Pt et Pd ;
- la demande de brevet japonais JP-A-04/197 443 qui utilise :
   en 1^{ère} zone catalytique : Pd et/ou Pt ;
   en 2^{ème} zone catalytique : Sr_{0.8}La_{0,2}MnAl₁₁O_{19-α}; et
   en 3^{ème} zone catalytique : Sr_{0.8}La_{0,2}MnAl₁₁O_{19-α} ;
- les demandes de brevet internationales WO-A-92/9848 et WO-A-92/9849 qui utilisent :
   en 1^{ère} zone catalytique : Pd et (Pt ou Ag) ;
   en 2^{ème} zone catalytique : Pd et (Pt ou Ag); et
   en 3^{ème} zone catalytique : pérovskite ABO₃ ou oxyde de métal du groupe V(Nb ouV), du groupe VI (Cr) ou du groupe VIII (Fe, Co, Ni).

Le point critique du procédé multi-étages réside dans le contrôle de la température au sein des différents étages catalytiques. Si la réaction de combustion s'emballe, la température du catalyseur peut atteindre rapidement la température adiabatique. Or, il est important de couvrir l'intégralité de la plage de charge de la turbine à gaz. Depuis le processus d'inflammation jusqu'à la pleine charge en passant par le ralenti, le rapport air-combustible peut varier dans des proportions importantes. L'utilisation d'une telle chambre de combustion catalytique peut donc s'avérer délicate.

Une approche globale du procédé de combustion catalytique prenant en compte à la fois les avantages et les inconvénients de la configuration du réacteur catalytique et la formulation catalytique devient donc impérative. Et, malgré les nombreux travaux de perfectionnement déjà réalisés, il reste intéressant de rechercher une combinaison configuration du réacteur catalytique - formulation catalytique qui réponde aux exigences d'un procédé de combustion de plus en plus draconiennes.

On connaît par ailleurs, selon la demande de brevet FR-A-2 726 774, déposé par la demanderesse, des catalyseurs de combustion comportant du fer et du cérium associés au palladium et/ou au platine, déposés sur un oxyde inorganique réfractaire.

On connaît par ailleurs, selon le brevet français FR-B-2 721 837, déposé par la demanderesse, des catalyseurs de combustion répondant essentiellement à la formule A₁₋ₓB_{y}C_{z}Al_{12-y-z}O_{19-δ}, dans laquelle A représente au moins un élément de valence X sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0,25, y ayant une valeur de 0,5 à 3 et z ayant une valeur de 0,01 à 3; la somme y + z ayant une valeur maximale de 4 et δ a une valeur qui, déterminée en fonction des valences X et Y respectives des éléments A et B et de la valeur de x, de y et de z, est égale à 1-1/2 {(1-x)X+yY-3y-z}.

Les travaux de recherche menées par la demanderesse l'ont conduite à découvrir, de façon surprenante, qu'il était particulièrement avantageux d'associer les deux types de catalyseurs décrits antérieurement, dans des zones catalytiques successives.

La présente invention propose donc un procédé de combustion catalytique comprenant la mise en oeuvre de plusieurs zones catalytiques successives, ledit procédé étant caractérisé en ce qu'au moins une des premières zones catalytiques comprend un catalyseur comportant un substrat monolithique, un support poreux à base d'oxyde inorganique réfractaire et une phase active constituée de cérium, de fer, et éventuellement du zirconium, ainsi qu'au moins un métal choisi dans le groupe formé par le palladium et le platine; et en ce qu'au moins une des zones catalytiques ultérieures comprend une phase active comprenant au moins un oxyde d'au moins un élément A de valence X sélectionné dans le groupe formé par le baryum, le strontium et les terres rares; au moins un élément B de valence Y sélectionné dans le groupe formé par Mn, Co et Fe; d'au moins un élément C sélectionné dans le groupe formé par Mg et Zn; cet oxyde peut répondre à la formule A₁₋ₓB_{y}C_{z}Al_{12-y-z}O_{19-δ}, où x a une valeur de 0 à 0,25, y a une valeur de 0,5 à 3 et z a une valeur de 0,01 à 3; la somme y + z ayant une valeur maximale de 4 et δ a une valeur qui, déterminée en fonction des valences X et Y respectives des éléments A et B et des valeurs de x, y et de z, est égale à 1-1/2{(1-x)X + yY -3y-z}.

Par souci de simplification, on décrira ci-après le procédé de l'invention comme mettant en jeu une première zone catalytique et une deuxième zone catalytique, mais il doit être entendu que ladite première zone peut comprendre plusieurs zones élémentaires successives, et ladite deuxième zone peut également comprendre plusieurs zones élémentaires successives.

Selon des caractéristiques générales d'un catalyseur de première zone du procédé de la présente invention, la teneur en support poreux est comprise entre 100 et 400 g, plus particulièrement entre 200 et 400 g par litre de catalyseur ; la teneur en cérium est comprise entre 0,3 et 20 %, en poids par rapport au support poreux; la teneur en fer est comprise entre 0,01 et 3,5% en poids par rapport au support; la teneur en zirconium est comprise entre 0 et 20 %, plus particulièrement entre 0,3 et 20% en poids par rapport au support poreux, et la teneur en palladium et/ou platine est supérieure à 3 g par litre de catalyseur.

Selon des caractéristiques préférées dudit catalyseur de première zone du procédé de la présente invention, la teneur en support poreux est comprise entre 200 et 350 g par litre de catalyseur ; la teneur en cérium est comprise entre 2 et 15 % en poids par rapport au support poreux; la teneur en fer est comprise entre 0,1 et 2% en poids par rapport au support; la teneur en zirconium est comprise entre 2 et 15% en poids par rapport au support poreux, et la teneur en palladium et/ou platine est comprise entre 5 et 15 g par litre de catalyseur.

Comme indiqué ci-dessus, la teneur en support poreux du catalyseur de première zone du procédé de la présente invention varie de façon préférentielle entre 100 et 400 g par litre de catalyseur, de façon préférée entre 200 et 400 et de façon encore plus préférée entre 200 et 350 g/l. Si la teneur en support poreux est inférieure à 100 g/l, l'activité catalytique n'est pas suffisante. Inversement, une teneur en support poreux supérieure à 400 g/l est également néfaste pour l'activité catalytique, car elle se traduit par un bouchage des canaux du monolithe.

Dans les catalyseurs de première zone du procédé selon l'invention, le substrat monolithique peut consister en un monolithe à structure cellulaire, en céramique ou métallique (enroulement, empilement de feuillards métalliques ou encore association de fibres métalliques ou de fils métalliques sous la forme d'un monolithe à structure fibreuse). La céramique employée peut être de la mullite, de la cordierite, de l'alumine-α, de la zircone, du titanate d'alumine, du carbure de silicium, du nitrure de silicium ou leurs mélanges. Ces substrats monolithiques sont produits par extrusion. Les alliages métalliques employés doivent présenter de préférence des propriétés réfractaires. Ils peuvent par exemple être composés de fer, chrome, d'aluminium et de cérium ou d'yttrium, tels que l'acier Gilphal 135® de la société Imphy. Le substrat métallique peut être préalablement soumis à un traitement oxydant à une température comprise entre 700°C et 1200°C, de préférence entre 800 et 1000°C. La densité de cellules, c'est-à-dire le nombre de cellules par section de monolithe, est généralement comprise entre 50 et 600 cellules par pouce-carré (7,75 à 93 cellules par cm²).

La préparation et la mise en forme du support peuvent constituer la première étape de la préparation du catalyseur de première zone. Le support à base d'oxyde réfractaire mis en oeuvre est généralement choisi dans le groupe formé par les oxydes réfractaires des métaux des Groupes IIa, IIIa, IVa et IVb de la classification périodique des éléments et leurs mélanges en toutes proportions.

Le plus souvent, les oxydes d'aluminium de formule générale Al₂O₃, nH₂O sont utilisés. Leur surface spécifique est comprise entre 10 et 500 m²/g. Les oxydes dans lesquels n est compris entre 0 et 0,6, sont classiquement obtenus par déshydratation contrôlée d'hydroxydes dans lesquels 1≤n≤3. Ces hydroxydes sont eux-mêmes préparés par précipitation en milieu aqueux de sels d'aluminium par des bases ou des acides. Les conditions de précipitation et de mûrissement déterminent plusieurs formes d'hydroxydes dont les plus communs sont la boehmite (n=1), la gibbsite et la bayerite (n=3). En fonction des conditions hydrothermiques de traitement, ces hydroxydes donnent plusieurs oxydes ou alumines de transition. On dénombre ainsi les formes alpha, delta, éta, gamma, kappa, khi, rhô et théta. Celles-ci se différencient essentiellement par l'organisation de leur structure cristalline. Lors de traitements thermiques, ces différentes formes sont susceptibles d'évoluer entre elles, selon une filiation complexe, qui dépend des conditions opératoires de traitement. La forme alpha, qui présente une surface spécifique très faible, est stable à plus haute température. On préfère utiliser des alumines présentant une surface spécifique comprise entre 20 et 250 m²/g et en particulier l'alumine gamma et/ou delta.

Afin d'augmenter la stabilité thermique de ce ou ces oxydes, divers composés peuvent être incorporés au support poreux, soit directement sous la forme de pigments, soit sous la forme de composés précurseurs d'oxydes. Les terres rares, les métaux alcalino-terreux et la silice, qui sont parmi les stabilisants les plus performants de l'alumine, peuvent être avantageusement incorporés au support poreux. On stabilise le plus souvent par de la silice, à une teneur de 1 à 6% en poids par rapport au support poreux.

D'une manière générale, ces supports mis en oeuvre selon la présente invention peuvent avoir avantageusement été traités, ainsi qu'il est bien connu de l'homme de l'art, par des agents porogènes tels que ceux à base de cellulose, naphtaline, gommes naturelles ou polymères synthétiques, de façon à leur conférer des propriétés de porosité désirée.

Dans le catalyseur de première zone du procédé selon l'invention, la teneur en métal du groupe constitué par le platine et le palladium est en général supérieure à 3 g par litre de catalyseur et de manière préférée comprise entre 5 et 20 g par litre de catalyseur et plus particulièrement comprise entre 5 et 15 g par litre de catalyseur. Si la teneur en métal précieux est inférieure à 3 g, l'activité catalytique n'est pas suffisamment élevée pour satisfaire aux exigences d'un procédé de combustion. A l'opposé, lorsque la teneur en métal précieux dépasse 20 g, une augmentation ultérieure de la teneur en métal précieux ne permet pas d'accroître de façon significative l'activité catalytique. Selon l'invention, le palladium est préféré. Toutefois, le platine peut être avantageusement utilisé pour un étage de combustion fonctionnant à des températures relativement basses, par exemple à environ 500°C, ou en combinaison avec le palladium.

La présence de fer et de cérium déposés simultanément sur le ou les oxydes inorganiques réfractaires permet de renforcer l'activité et la stabilité du catalyseur au cours du temps. La présence de zirconium peut encore renforcer cet effet de synergie.

La teneur en cérium du catalyseur de première zone du procédé selon l'invention est comprise de préférence entre 0,3 et 20 % en poids par rapport au support, et de façon encore plus préférentielle entre 2 et 15 % en poids par rapport au support poreux. Si la teneur en cérium est inférieure à 0,3 %, celui-ci ne promeut pas de façon satisfaisante l'activité catalytique. Inversement, lorsque la teneur en cérium dépasse 20% en poids par rapport au support poreux, une augmentation ultérieure de la teneur en cérium ne permet pas d'accroître de façon significative l'activité catalytique.

La teneur en fer du catalyseur de première zone du procédé selon l'invention est de préférence comprise entre 0,01 et 3,5% en poids par rapport au support et plus particulièrement entre 0,1 et 2%. Si la teneur en fer dépasse 3,5%, le fer alors peut accélérer fortement la chute de surface spécifique du support poreux à base d'alumine.

La teneur en zirconium du catalyseur de première zone du procédé selon l'invention est en général comprise entre 0 et 20% en poids de support poreux, et de façon préférée comprise entre 0,3 et 20% en poids et plus particulièrement entre 2 et 15% en poids par rapport au support poreux. Lorsque la teneur en zirconium atteint 20% en poids par rapport au support poreux, une augmentation ultérieure de la teneur en zirconium ne permet pas d'accroître de façon significative l'activité catalytique.

La préparation du catalyseur de première zone déposé sur un substrat consiste en une étape d'enduction, au cours de laquelle le substrat est plongé dans une suspension contenant les précurseurs des composants du catalyseur, puis est séché et calciné après évacuation de l'excès de ladite suspension. Une deuxième étape dite d'imprégnation permet de déposer les métaux actifs. Pour cela, on met en contact le substrat enduit avec une ou plusieurs solutions du ou des précurseurs des métaux actifs. Après avoir été éventuellement égoutté, le substrat ainsi enduit et imprégné est séché et subit un traitement thermique.

Le dépôt de cérium, de fer et éventuellement de zirconium sur le support du catalyseur de première zone de la présente invention est réalisable selon toutes les techniques connues de l'homme de l'art et peut intervenir à tout moment lors de la préparation du catalyseur. Ces éléments peuvent être introduits sous forme de composés solides (oxydes, hydroxydes, carbonates, hydroxycarbonates ou encore sels insolubles) ou de composés solubles (nitrates, sulfates, chlorures, alcoolates) dans la suspension d'enduction, et/ou pré-imprégnés sur l'un des constituants de la suspension d'enduction, et/ou déposés sur le support poreux avant l'imprégnation des métaux nobles, et/ou coimprégnés avec ces métaux selon la technique envisagée. Dans le cas où le cérium, le fer et éventuellement le zirconium sont déposés après la mise en forme des alumines contenant éventuellement d'autres métaux, les méthodes employées peuvent être par exemple l'imprégnation à sec, l'imprégnation par excès de solution ou l'échange ionique. Sur un support déjà mis en forme, une méthode préférée d'introduction du métal noble est l'imprégnation en milieu aqueux en utilisant un excès de solution. Afin d'éliminer le solvant d'imprégnation, cette imprégnation est suivie d'un séchage et d'une calcination sous air à une température comprise entre 300 et 900°C .

Selon un mode de mise en oeuvre particulier, on imprègne successivement le support avec une solution contenant des composés contenant du cérium, du fer et éventuellement du zirconium, puis avec une ou des solutions contenant des composés des métaux précieux que l'on souhaite introduire.

Comme composés du cérium, du fer et du zirconium que l'on peut mettre en oeuvre, on citera notamment les sels de cérium, de fer et de zirconium, et plus particulièrement le nitrate céreux, l'acétate céreux, le chlorure céreux et le nitrate cérique ammoniacal, le nitrate ferrique, le citrate de fer ammoniacal et le chlorure fenique, et le nitrate de zirconyle et le tétrachlorure de zirconium.

Les précurseurs des métaux du groupe formé par le platine et le palladium sont ceux classiquement utilisés pour la préparation des catalyseurs, en particulier les chlorures, les complexes chlorés, les nitrates, les complexes amminés ou les acétylacétonates. A titre d'exemples, on peut citer l'acide chloroplatinique, le chlorure de palladium, le chlorure de platine tétrammine, le dinitrodiamminoplatine et le nitrate de palladium.

La profondeur d'imprégnation peut être avantageusement réglée par l'utilisation de méthodes connues de l'homme de l'art et en particulier par ajout dans la solution des métaux précieux d'une certaine quantité d'acide minéral ou organique. On utilise couramment les acides nitrique, chlorhydrique et fluorhydrique ou les acides acétique, citrique et oxalique.

Selon des caractéristiques préférées d'un catalyseur de deuxième zone du procédé selon l'invention, le rapport atomique de A sur la somme B + C + Al est d'environ 0,06 à 0,1 et A₁₋ₓB_{y}C_{z}Al_{12-y-z}O_{19-δ} est un hexaaluminate lamellaire dans lequel l'élément B et/ou l'élément C sont incorporés au sein de la structure. Selon d'autres caractéristiques préférées du catalyseur de deuxième zone du procédé selon l'invention, l'élément A est le lanthane ou le baryum, l'élément B est le manganèse et l'élément C est le magnésium.

Quand le rapport atomique de A sur la somme B + C + Al est de 1/12 pour les alcalino-terreux et de 1/11 à 1/14 pour les terres rares, la formulation A₁₋ₓB_{y}C_{z}Al_{12-y-z}O_{19-δ} possède un maximum de stabilité thermique. Cependant, le rapport atomique de A sur la somme B + C + Al n'est pas limité à ces rapports; de façon préférentielle, il est proche de ces rapports et il est d'environ 0,06 à 0,1. Cette plage de rapport préférée confère à la formulation catalytique : A₁₋ₓB_{y}C_{z}Al_{12-y-z}O_{19-δ} ses propriétés de résistance au frittage à des températures élevées. Pour des valeurs du rapport atomique de A sur la somme B + C + Al largement inférieurs à 0,06, l'alumine alpha, appelée communément corindon, apparaît majoritairement au cours de la calcination. Pour des valeurs du rapport atomique de A sur la somme B + C + Al dépassant largement 0,1, de nouvelles structures cristallines se forment selon la nature de l'élément A : AO-Al₂O₃, A₂O₃-Al₂O₃ etc; celles-ci ne possèdent pas une résistance au frittage aussi élevée que les compositions A₁₋ₓB_{y}C_{z}Al_{12-y-z}O_{19-δ} dont le rapport atomique de A sur la somme B + C + Al est d'environ entre 0,06 à 0,1. En effet, l'oxyde qui constitue la majeure partie du catalyseur de deuxième zone du procédé de la présente invention, possède de préférence une structure cristalline de type hexaaluminate lamellaire voisine de (ou similaire à) la magnétoplumbite (par exemple MO-6Al₂O₃; avec M = Ba, Ca ou Sr), l'alumine-β ou La₂O₃/ 11∼14-Al₂O₃. Cette structure cristalline est supposée être à l'origine des propriétés de résistance thermique supérieures du catalyseur de deuxième zone du procédé de la présente invention. Cette structure cristalline apparaît à des températures inférieures ou égales à la température de transition vers l'alumine alpha, permettant ainsi d'éviter la transition vers alpha et la chute de surface spécifique et la diminution d'activité catalytique qui en résultent.

Les éléments B et C qui sont les composants actifs du catalyseur de deuxième zone sont fixés ou incorporés au sein la structure de type hexaaluminate lamellaire décrite précédemment. Cette incorporation ou cette fixation serait à l'origine de la bonne résistance au frittage des éléments actifs B et C et par conséquent de la bonne conservation de l'activité catalytique au cours du temps. En outre, la proximité au sein de la structure de l'hexaaluminate des deux éléments actifs B et C entraîne un effet de synergie sur l'activité catalytique. Cet effet de synergie pourrait conférer au catalyseur de deuxième zone du procédé de la présente invention son activité catalytique supérieure.

Les valeurs de y et z qui sont représentatives de la composition en éléments actifs B et C dans la formule préférée du catalyseur de deuxième zone du procédé de la présente invention A₁₋ₓB_{y}C_{z}Al_{12-y-z}O_{19-δ} sont, de façon préférentielle, comprises respectivement entre 0,5 et 3 et entre 0,01 et 3, et de façon encore plus préférentielle comprises entre 0,5 et 2 et entre 0,01 et 2. Si les valeurs y et z sont respectivement inférieures à 0,5 et à 0,01, il n'y pas assez de composants actifs au sein de la formulation et l'activité catalytique n'est pas suffisamment élevée pour satisfaire aux exigences d'un procédé de combustion. A l'opposé, si les valeurs y et z en éléments actifs sont supérieures à 3, une majorité des composants catalytiques ne peuvent s'incorporer avantageusement au sein de la structure de type hexaaluminate lamellaire et ils ne peuvent donc pas contribuer à l'activité catalytique. Ils forment une phase oxyde distincte de la formulation du catalyseur.

Selon une variante de l'invention, le catalyseur de deuxième zone peut, en outre, comporter un métal du groupe du platine. Ce métal du groupe du platine peut être déposé à la surface dudit catalyseur (par imprégnation, par exemple), ou encore il peut être incorporé au cours de la préparation En effet, il peut s'avérer efficace d'imprégner ou d'incorporer un métal du groupe du platine dans le catalyseur de la deuxième zone afin d'améliorer son activité à basse température. Par ailleurs, en incorporant le métal du groupe du platine au cours de la préparation, on peut en outre améliorer sa résistance au frittage. De tels catalyseurs imprégnés par un métal du groupe du platine ou contenant un métal du groupe du platine incorporé au cours de la préparation sont également inclus dans la présente invention.

On décrit plus précisement ci-après les précurseurs des éléments entrant dans la composition du catalyseur de deuxième zone du procédé de l'invention, résistant à des températures élevées, et comprenant principalement un oxyde composite d'un moins un élément A, d'au moins un élément B, d'au moins un élément C et d'aluminium.

En tant que précurseur de l'aluminium qui constitue l'élément majoritaire pour obtenir ce catalyseur, il est préférable d'utiliser une alumine appartenant au groupe des alumines de transition et des hydrates d'alumine: alumines gamma, boehmite, gibbsite, bayerite, etc... quand on procède par une méthode traditionnelle de réaction entre poudres à l'état solide. Quand, pour obtenir ce catalyseur, on procède par une technique de coprécipitation, il est préférable d'utiliser un composé soluble de l'aluminium tel que le nitrate d'aluminium, le sulfate d'aluminium, le chlorure d'aluminium, etc. Quand, pour obtenir ce catalyseur on procède par hydrolyse d'un composé organique, il est préférable d'utiliser un composé soluble de l'aluminium, tel que par exemple un alcoxyde d'aluminium.

En tant que précurseur de l'élément A, on peut utiliser un composé solide (oxyde, hydroxyde, carbonate, hydroxycarbonate ou encore sel insoluble) ou un composé soluble (nitrate, sulfate, chlorure ou alcoxyde) selon la technique envisagée.

En tant qu'élément A, on utilise en général le baryum, le strontium ou une terre rare, de préférence le lanthane ou le baryum.

En tant que précurseurs des éléments B et C, qui sont essentiellement responsables de l'activité catalytique de la formulation, on peut utiliser un composé solide (oxyde, hydroxyde, carbonate, hydroxycarbonate ou encore sel insoluble) ou un composé soluble (nitrate, sulfate, chlorure ou alcoxyde) selon la technique envisagée. En tant qu'élément B du catalyseur de deuxième zone catalytique de la présente invention, on utilise en général Mn, Fe et/ou Co, de préférence Mn et/ou Co et plus préférentiellement Mn. En tant qu'élément C, Mg est préférentiellement utilisé.

En fonction de ces différents précurseurs de l'aluminium, des éléments B et C différentes méthodes de préparation des catalyseurs ou de supports de catalyseurs peuvent être utilisées : réaction à l'état solide, complexation, hydrolyse d'alcoxydes, coprécipitation, imprégnation ou sol-gel.

L'invention propose de mettre en forme ces formulations sous forme de monolithes, de billes, de tablettes, d'extrudés ou d'autres formes communément utilisées pour les catalyseurs et les supports de catalyseurs.

L'invention propose également d'utiliser ces catalyseurs déposés sur divers substrats céramiques ou métalliques. Ces substrats peuvent être des monolithes tels que décrits ci-dessus.

Généralement, le procédé de préparation de ces catalyseurs comprend une ou plusieurs étapes intermédiaires et/ou finales de calcination qui transforment les précurseurs du catalyseur en catalyseur de la présente invention.

Pour obtenir le catalyseur de deuxième zone, il est préférable de calciner à une température supérieure ou égale à 900°C. Lorsque la calcination est menée à une température inférieure à 900°C, les précurseurs ne se transforment pas en l'oxyde désiré au cours d'une durée raisonnable d'un point de vue pratique. Cependant, pour des températures supérieures ou égales à 1500°C, la surface spécifique de l'hexaaluminate obtenu tend à diminuer fortement en raison de la croissance cristalline du matériau accélérée à cette température. Il est donc nécessaire d'adapter les conditions de calcination choisies avec la surface spécifique désirée afin d'obtenir le catalyseur de deuxième zone de la présente invention avec une surface spécifique compatible avec un procédé de combustion catalytique.

Différentes méthodes de préparation des catalyseurs ou de supports de catalyseurs peuvent être utilisés telles que réactions entre poudres à l'état solide, hydrolyse d'alcoxydes, complexation, coprécipitation, imprégnation, procédé sol-gel...

Le catalyseur de deuxième zone peut être préparé à partir d'un mélange de poudres de pigments solides (oxydes, hydroxydes, carbonates, hydroxycarbonates ou encore sels insolubles), mais plus préférentiellement, il est obtenu par un procédé consistant à dissoudre et à mélanger un composé d'aluminium soluble dans l'eau et/ou dans l'alcool, un composé soluble dans l'eau et/ou dans l'alcool d'un élément A sélectionné dans le groupe formé par le baryum, le strontium et les terres rares, un composé soluble dans l'eau et/ou dans l'alcool d'un élément B sélectionné dans le groupe formé par Mn, Co et Fe, et un composé soluble dans l'eau et/ou dans l'alcool d'un élément C sélectionné dans le groupe formé par Mg et Zn, de telle manière que le rapport atomique de A sur la somme B + C + Al soit d'environ 0,06 à 0,1, que le rapport atomique de B sur la somme B + C + Al soit d'environ 0,04 à 0,2 et que le rapport atomique de C sur la somme B + C + Al soit d'environ 0,01 à 0,2, de manière à obtenir une précipitation, une hydrolyse et/ou une décomposition thermique conduisant à la formation d'un produit dans la solution, à extraire ce produit de la solution, à précalciner le produit extrait entre 200°C et 600°C et à calciner le produit à une température d'au moins 900°C. Parmi les méthodes citées ci-dessus, la coprécipitation et l'hydrolyse des alcoxydes sont préférentiellement utilisées. Bien que l'explication détaillée suivante traité plus spécifiquement de la coprécipitation, l'hydrolyse des alcoxydes pourrait tout aussi bien s'y appliquer. De même, dans ce qui suit, le lanthane, le manganèse et le magnésium ont été choisis pour illustrer le procédé de préparation; cependant les autres éléments pouvaient tout aussi bien l'illustrer.

Le catalyseur de deuxième zone est préférentiellement préparé de la façon suivante. Dans une première phase, on prépare un mélange contenant un sel d'aluminium soluble dans l'eau, un sel de lanthane soluble dans l'eau, un sel de manganèse soluble dans l'eau et un sel de magnésium soluble dans l'eau. Dans une deuxième phase, on réalise la coprécipitation des hydroxydes des sels solubles utilisés dans la première phase. La coprécipitation peut être effectuée en ajoutant à la solution l'agent précipitant ou inversement en ajoutant le mélange des sels solubles dans l'agent précipitant. D'une façon préférée, la précipitation sera conduite en conditions stationnaires, la solution contenant les sels solubles et celle contenant l'agent précipitant étant ajoutés simultanément, leurs débits étant asservis au pH mesuré, dans un réacteur dit "à surverse" où la précipitation se produit. Cette coprécipitation est menée dans une plage de pH qui permet une coprécipitation complète de tous les constituants précurseurs du catalyseur de deuxième zone catalytique du procédé de la présente invention. Dans l'exemple étudié, cette précipitation est menée à un pH compris entre 7 et 12. Il se forme, outre les hydroxydes des précurseurs de Mn, La, Al et Mg qui précipitent, des composés indésirables, qui sont éliminés par filtration et/ou simple lavage à l'eau. Ensuite, le coprécipité est séché et précalciné entre 200°C et 650°C, puis le produit obtenu est calciné à une température comprise entre 900°C et 1500°C durant 5 à 30 heures afin de le transformer un catalyseur de deuxième zone du procédé de la présente invention.

Comme composés solubles de l'aluminium que l'on peut mettre en oeuvre, on citera notamment le nitrate d'aluminium, le chlorure d'aluminium, etc. Comme composés solubles du lanthane que l'on peut mettre en oeuvre, on citera notamment le nitrate de lanthane, le chlorure de lanthane etc. En tant que composés solubles du manganèse que l'on peut mettre en oeuvre, on citera notamment le nitrate de manganèse, le chlorure de manganèse etc. En tant que composés solubles du magnésium que l'on peut mettre en oeuvre, on citera notamment le nitrate de magnésium, le chlorure de magnésium etc. Comme agents précipitants, l'hydroxyde de sodium, le carbonate de sodium, la potasse et l'ammoniaque peuvent être utilisés. Les agents précipitants sont choisis de telle manière que l'ensemble des précurseurs du catalyseur de deuxième zone du procédé de la présente invention soient précipités ensemble. Il peut être parfois nécessaire d'utiliser un mélange d'agents coprécipitants: hydroxyde de sodium + carbonate de sodium, par exemple, afin de obtenir une coprécipitation de tous les précurseurs. Ainsi, dans le cas d'un catalyseur de deuxième zone du procédé de la présente invention contenant du strontium et du baryum, il est préférable que le mélange d'agents coprécipitants contienne du carbonate de sodium. On propose également de réaliser des précipitations séparées des différents précurseurs, puis mélanger ensemble les produits obtenus afin d'obtenir le précurseur du catalyseur de deuxième zone du procédé de la présente invention.

Le procédé selon l'invention apporte des performances améliorées spécialement dans le domaine de la combustion catalytique d'hydrocarbures, tels que le méthane, du monoxyde de carbone, de l'hydrogène ou de leurs mélanges.

Les exemples suivants illustrent l'invention sans toutefois la limiter .

Les divers précurseurs employés sont des produits commerciaux de PROLABO® . La composition élémentaire des catalyseurs a été déterminée par fluorescence X (PHILIPS PW 1480® ).

### EXEMPLE 1 : Préparation des catalyseurs CP1A de première zone et de deuxième zone CP1B du procédé P1 selon la présente invention.

### EXEMPLE 1a

### *Préparation du catalyseur CP1A de première zone du procédé P1 selon l'invention.

On dépose du fer et du cérium sur de l'alumine gamma par imprégnation de 700g d'alumine par une solution aqueuse de nitrate céreux et de nitrate ferrique. Cette solution contient l'équivalent de 45g d'oxyde de cérium (CeO₂) et de 15 g d'oxyde de fer (Fe₂O₃).

L'alumine imprégnée est ensuite séchée à 150°C puis calcinée sous air à 600°C durant 3 heures.

On prépare une suspension d'enduction à partir de deux litres d'eau désionisée additionnée de l'équivalent de 12g d'acide nitrique, 600g d'alumine de type gamma préalablement imprégnée de fer et de cérium et de 140 g de pseudo-boehmite à 72% de matière sèche. Cette suspension est broyée de telle manière que la taille des particules soit inférieure à 10 microns.

Dans une première étape dite d'enduction, un monolithe céramique (cordiérite) de 0,84 litre présentant 62 cellules par cm² (400 cellules par pouce-carré) est immergé dans la suspension, puis égoutté avant que l'excès de suspension soit éliminé par soufflage. Le support est ensuite séché puis calciné dans un four dont la température est maintenue à 600°C pendant deux heures. Ces étapes d'immersion, soufflage et calcination sont répétées une deuxième fois afin de déposer l'équivalent de 200 g de support poreux par litre de catalyseur (substrat).

Dans une deuxième étape dite d'imprégnation, le monolithe enduit est immergé dans une solution de nitrate de palladium de telle manière que la quantité de palladium fixée après séchage et calcination à 500°C pendant deux heures soit de 5% en poids de palladium par rapport au support poreux, soit encore exprimé par rapport au catalyseur : 10 g de palladium par litre de catalyseur.

Ce catalyseur de première zone ainsi préparé contient en poids rapporté au support poreux 4,13% de cérium, 1,31% de fer et 5% de palladium.

### EXEMPLE 1b

### *Préparation du catalyseur CP1B de deuxième zone du procédé P1 selon l'invention.

Dans de l'eau désionisée, on verse du nitrate d'aluminium Al(NO₃)₃,9H₂O, de l'acétate de barium Ba(O₂C₂H₅)₂, du nitrate de manganèse Mn(NO₃)₂,4H₂O et du nitrate de magnésium Mg(NO₃)₂,6H₂O jusqu'à dissolution complète des cristaux, puis on prolonge l'agitation pendant 1 heure de manière à homogénéiser le mélange. On opère ensuite, a température constante comprise entre 20 et 100°C, une coprécipitation au carbonate d'ammonium de manière à obtenir un pH de l'ensemble égal à 9. Le précipité obtenu est filtré et lavé à l'eau distillé de manière à éliminer le carbonate d'ammonium en excès et le nitrate d'ammonium résultant de la précipitation. Le gâteau de filtration est séché à l'étuve durant 12 heures à 120°C, puis il est calciné sous air dans un creuset en alumine à 600°C durant quatre heures, puis à 1200°C sous air durant seize heures.

On obtient un catalyseur CP1B de composition BaMnMgAl₁₀O_{19-δ}. La surface BET du catalyseur CP1B est de l'ordre de 15 m²/g.

On prépare une suspension d'enduction à partir de deux litres d'eau désionisée additionnée de la poudre du catalyseur CP1B. Cette suspension est broyée de telle manière que la taille des particules soit inférieure à 10 microns.

Un monolithe céramique (cordiérite) de 0,84 litre présentant 62 cellules par cm² est immergé dans la suspension, puis égoutté, puis l'excès de suspension est éliminé par soufflage. Le support est ensuite séché puis calciné dans un four dont la température est maintenue à 600°C pendant deux heures. Ces étapes d'immersion, soufflage et calcination sont répétées une deuxième fois afin de déposer l'équivalent de 120 g du catalyseur CP1B par litre de substrat.

### EXEMPLE 2 : Préparation des catalyseurs CP2A de première zone et de deuxième zone CP2B du procédé P2 selon la présente invention.

On dépose du cérium, du zirconium et du fer sur de l'alumine gamma par imprégnation de 700g d'alumine par une solution aqueuse de nitrate céreux, de nitrate de zirconyle et de nitrate ferrique. Cette solution contient l'équivalent de 51,5g d'oxyde de cérium (CeO₂), 43g d'oxyde de zirconium (ZrO₂) et de 6,5 g d'oxyde de fer (Fe₂O₃).

On prépare une suspension d'enduction à partir de deux litres d'eau désionisée additionnée de l'équivalent de 12g d'acide nitrique, 600g d'alumine de type gamma préalablement imprégnée de cérium, de zirconium et de fer et de 140 g de boehmite à 72% de matière sèche. Cette suspension est broyée de telle manière que la taille des particules soit inférieure à 10 microns.

Dans une première étape dite d'enduction, un monolithe en cordiérite de 0,84 litre présentant 62 cellules par cm² (400 cellules par pouce-carré) est immergé dans la suspension, puis égoutté avant que l'excès de suspension est éliminée par soufflage. Le support est ensuite séché puis calciné dans un four dont la température est maintenue à 600°C pendant deux heures. Ces étapes d'immersion, de soufflage et de calcination sont renouvelées une deuxième fois, voire une troisième fois, afin de déposer l'équivalent de 200g de support poreux par litre de catalyseur (substrat).

Dans une deuxième étape dite d'imprégnation, le monolithe enduit est immergé dans une solution de nitrate de palladium de telle manière que la quantité de palladium fixée après séchage et calcination à 500°C pendant deux heures soit de 3% en poids de palladium par rapport au support poreux, soit encore exprimé par rapport au volume de catalyseur : 10 g de palladium par litre de catalyseur.

Ce catalyseur CP2A ainsi préparé contient en poids rapporté au support poreux 6% de cérium, 4,55% de zirconium et 0,5% de fer et 5% de palladium.

Le catalyseur CP2B est identique au catalyseur CP1B.

### EXEMPLE 3 (comparatif): Préparation des catalyseurs CP3A de première zone et de deuxième zone CP3B du procédé P3.

Afin de montrer l'intérêt d'une formulation contenant à la fois du fer, du cérium et une phase active à base de palladium, on prépare une suspension d'enduction à partir de deux litres d'eau désionisée additionnée de l'équivalent de 12g d'acide nitrique, 600g d'alumine de type gamma sans fer ni cérium et de 140 g de pseudo-boehmite à 72% de matière sèche. Cette suspension est broyée de telle manière que la taille des particules soit inférieure à 10 microns.

Un monolithe céramique de 0,84 litre est enduit par cette suspension d'alumine, selon le procédé de l'exemple 1, de façon à déposer 200g d'alumine par litre de catalyseur (substrat).

On imprègne ensuite le monolithe par une solution de palladium de façon à déposer en poids 5% de palladium par rapport au support poreux enduit, soit encore exprimé par rapport au catalyseur : 10 g de palladium par litre de catalyseur.

Le catalyseur CP3B est identique au catalyseur CP1B.

### EXEMPLE 4 (comparatif): Préparation des catalyseurs CP4A de première zone et de deuxième zone CP4B du procédé comparatif P4.

Le catalyseur CP4A est identique au catalyseur CP1A.

Afin de montrer la nécessité d'obtenir une structure de type hexaaluminate lamellaire où le magnésium et le manganèse sont incorporés dans la structure, on a préparé un catalyseur représentatif de la famille des pérovskites.

Ce catalyseur CP4B est préparé selon la méthode décrite dans l'exemple 1 de la demande de brevet européen EP-A-089-199 à partir d'un mélange d'oxydes de lanthane et de manganèse. On obtient un catalyseur CP4B dont la composition est LaMnO₃.

### EXEMPLE 5 (comparatif) : Préparation des catalyseurs CP5A de première zone et de deuxième zone CP5B du procédé P5 comparatif.

Le catalyseur CP5A est identique au catalyseur CP3A. Le catalyseur CP5B est identique au catalyseur CP4B.

### EXEMPLE 6 : Comparaison des procédés de combustion catalytique.

Les performances des procédés sont comparés pour la réaction de combustion du méthane, principal constituant du gaz naturel.

Dans les catalyseurs préparés (références CP1A à CP5A) et (CP1B à CP5B), on découpe des cylindres de 1,5 cm de diamètre et de 5 cm de long, dans le sens longitudinal des canaux.

Les tests sont réalisés dans un réacteur de laboratoire comportant un tube dans lequel est introduit le catalyseur. Ce tube est placé au centre d'un four cylindrique pouvant être porté à une température de 1500°C. Un mélange air-méthane à 3,5 % en volume de méthane est préparé à l'aide de régulateurs de débit massique et envoyé à l'entrée du réacteur. Le débit horaire des gaz est 50 000 fois supérieur au volume du substrat (VVH= 50 000 h⁻¹). La concentration en méthane à l'entrée et à la sortie du réacteur est déterminée à l'aide d'un détecteur à ionisation de flamme (analyseur JUM ENGINEERING modèle FID 3-300). La conversion en méthane est le rapport en pourcentage entre la différence de concentration en méthane entre l'entrée et la sortie et la concentration en entrée.

Après une montée en température sous mélange réactionnel à 5°C/min de 250°C jusqu'à 530°C, on fixe la température d'entrée du mélange réactionnel à cette température. On détermine la conversion du méthane après 100 heures de fonctionnement en régime stabilisé. Cette durée permet de discriminer de façon significative les formulations en fonction de leur aptitude à stabiliser la combustion du méthane.

Le tableau 1 rassemble les compositions élémentaires des catalyseurs de première et deuxième zones et les conversions obtenues après 100 heures de fonctionnement en régime établi.

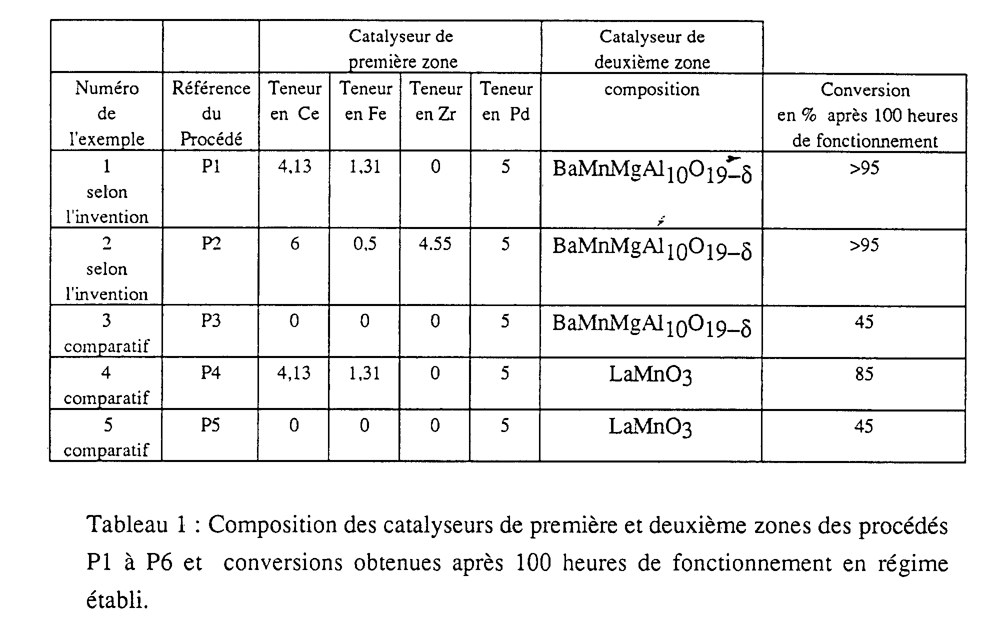

Le tableau 1 montre qu'il est particulièrement avantageux d'associer dans un procédé de combustion catalytique de gaz naturel à plusieurs étages une première zone catalytique comprenant de catalyseurs contenant du cérium, de fer, et éventuellement du zirconium, et du palladium et dans une deuxième zone catalytique une formulation ayant une résistance hydrothermale accrue : BaMnMgAl₁₀O_{19-δ}.

## Revendications

1. Procédé de combustion catalytique d'au moins un combustible comprenant la mise en oeuvre de plusieurs zones catalytiques successives, ledit procédé étant **caractérisé en ce qu'**au moins une des premières zones catalytiques comprend un catalyseur comportant un substrat monolithique, un support poreux à base d'oxyde inorganique réfractaire et une phase active comprenant du cérium, du fer, et éventuellement du zirconium, ainsi qu'au moins un métal choisi dans le groupe formé par le palladium et le platine;
et **en ce qu'**au moins une des zones catalytiques ultérieures comprend une phase active comprenant au moins un oxyde,
• - d'au moins un élément A choisi dans le goupe formé par le baryum, le strontium et les éléments des terres rares;
• - d'au moins un élément B choisi dans le groupe formé par le manganèse, le cobalt et le fer;
• - d'au moins un élément C choisi dans le groupe formé par le magnésium et le zinc;
• et d'aluminium.

2. Procédé selon la revendication 1, **caractérisé en ce qu'**il comprend la mise en oeuvre de deux zones catalytiques.

3. Procédé selon la revendication 1 ou 2, **caractérisé en ce que**, dans le catalyseur de première zone, la teneur en support poreux est comprise entre 100 et 400 g par litre de catalyseur; la teneur en cérium est comprise entre 0,3 et 20% en poids par rapport au support poreux; la teneur en fer étant comprise entre 0,01 et 3,5% en poids par rapport au support poreux; la teneur en zirconium est comprise entre 0 et 20% en poids par rapport au support poreux ; et la teneur en palladium et/ou platine est supérieure à 3 g par litre de catalyseur.

4. Procédé selon l'une des revendications 1 à 3, **caractérisé en ce que**, dans le catalyseur de première zone, la teneur en support poreux est comprise entre 200 et 350 g par litre de catalyseur, la teneur en cérium est comprise entre 2 et 15 % en poids par rapport au support poreux, la teneur en fer est comprise entre 0,1 et 2% en poids par rapport au support poreux, la teneur en zirconium est comprise entre 2 et 15% en poids par rapport au support poreux; et la teneur en palladium et/ou platine est comprise entre 5 et 20 g par litre de catalyseur.

5. Procédé selon l'un des revendications 1 à 4, **caractérisé en ce que**, dans le catalyseur de première zone, le support poreux à base d'oxyde inorganique réfractaire est choisi dans le groupe formé par l'alumine alpha, l'alumine delta, l'alumine éta, l'alumine gamma, l'alumine kappa, l'alumine khi, l'alumine rhô, l'alumine théta, la silice, les silices-alumines, l'oxyde de titane, la zircone et leurs mélanges.

6. Procédé selon l'une des revendications 1 à 5, **caractérisé en ce que**, dans le catalyseur de première zone, ledit support poreux présente une surface spécifique comprise entre 20 et 250 m²/g.

7. Procédé selon l'une des revendication 1 à 6, **caractérisé en ce que**, dans le catalyseur de première zone, ledit support a été stabilisé-thermiquement par introduction d'au moins un composé choisi dans le groupe formé par les oxydes de terres rares trivalentes, les oxydes de métaux alcalino-terreux et la silice.

8. Procédé selon la revendication 7, **caractérisé en ce que**, dans le catalyseur de première zone, ledit support a été stabilisé thermiquement par de la silice à une teneur de 1 et 6% en poids par rapport audit support poreux.

9. Procédé selon l'une des revendications 1 à 8, **caractérisé en ce que**, dans le catalyseur de première zone, ledit substrat est métallique ou céramique.

10. Procédé selon l'une des revendications 1 à 9, **caractérisé en ce que** dans le catalyseur de deuxième zone ledit oxyde répond à la formule A₁₋ₓB_{y}C_{z}Al_{12-y-z}O_{19-δ}, dans laquelle A représente au moins un élément de valence X sélectionné dans le groupe formé par le baryum, le strontium et les terres rares; B représente au moins un élément de valence Y sélectionné dans le groupe formé par Mn, Co et Fe; C représente au moins un élément sélectionné dans le groupe formé par Mg et Zn; x ayant une valeur de 0 à 0,25, y ayant une valeur de 0,5 à 3 et z ayant une valeur de 0,01 à 3; la somme y + z ayant une valeur maximale de 4 et δ a une valeur qui, déterminée en fonction des valences X et Y respectives des éléments A et B et des valeurs de x, y et de z, est égale à 1-1/2 {(1-x)X + yY-3 y-z}.

11. Procédé selon la revendication 10 **caractérisé en ce que**, dans ledit oxyde, le rapport atomique de A sur la somme B + C + Al est d'environ 0,06 à 0,1.

12. Procédé selon l'une des revendications 10 et 11, **caractérisé en ce que**, dans ledit oxyde, les valeurs de y et z sont comprises respectivement entre 0,5 et 2 et entre 0,01 et 2.

13. Procédé selon l'une des revendications 1 à 12, **caractérisé en ce que**, dans le catalyseur de deuxième zone, l'élément A est le lanthane ou le baryum, l'élément B est le manganèse et l'élément C est le magnésium.

14. Procédé selon l'une des revendications 1 à 13, **caractérisé en ce que**, dans le catalyseur de deuxième zone, ledit oxyde est un hexaaluminate lamellaire dans lequel l'élément B et/ou l'élément C sont incorporés au sein de la structure cristalline.

15. Procédé selon l'une des revendications 1 à 14, **caractérisé en ce que**, dans le catalyseur de deuxième zone, ledit oxyde est supporté sur un substrat métallique ou céramique.

16. Procédé selon la revendication 15, dans lequel le substrat est un matériau de forme monolithique à structure cellulaire.

17. Procédé selon l'une des revendications 1 à 14, **caractérisé en ce que**, dans le catalyseur de deuxième zone, ledit oxyde est mis sous forme monolithique à structure cellulaire.

18. Procédé selon l'une des revendications 1 à 17, **caractérisé en ce que**, dans le catalyseur de deuxième zone, ledit oxyde contient un métal du groupe du platine déposé à sa surface ou incorporé au cours de la préparation.

## Patentansprüche

1. Verfahren zur katalytischen Verbrennung wenigstens eines Brennstoffs, die Verwirklichung mehrerer aufeinanderfolgender katalytischer Zonen umfassend, wobei das Verfahren sich dadurch auszeichnet, dass wenigstens eine der ersten katalytischen Zonen einen Katalysator aufweist, der umfasst: ein monolitisches Substrat, einen porösen Träger auf der Basis feuerfesten anorganischen Oxids sowie eine aktive Phase, die Cer, Eisen und gegebenenfalls Zirconium sowie wenigstens ein Metall umfasst, das aus der durch Palladium und Platin gebildeten Gruppe gewählt ist;
und dass wenigstens eine der katalytischen späteren Zonen eine aktive wenigstens eine ein Oxid umfassende Phase aufweist,
• - wenigstens ein Element A, das aus der durch Barium, Strontium und die Seltenen Erden gebildeten Gruppe gewählt ist;
• - wenigstens ein Element B, das aus der durch Mangan, Cobalt und Eisen gebildeten Gruppe gewählt ist;
• - wenigstens ein Element C, das aus der durch Magnesium und Zink gebildeten Gruppe gewählt ist;
• sowie Aluminium.

2. Verfahren nach Anspruch 1, **dadurch gekennzeichnet, dass** es die Realisierung zweier katalytischer Zonen umfasst.

3. Verfahren nach Anspruch 1 oder 2, **dadurch gekennzeichnet, dass** im Katalysator der ersten Zone der Gehalt an porösem Träger zwischen 100 und 400 g pro Liter Katalysator, der Gehalt an Cer zwischen 0,3 und 20 Gew.-%, bezogen auf den porösen Träger, der Gehalt an Eisen zwischen 0,01 und 3,5 Gew.-%, bezogen auf den porösen Träger; der Gehalt an Zirconium zwischen 0 und 20 Gew.-%, bezogen auf den porösen Träger, liegt; und der Gehalt an Palladium und/oder Platin höher als 3 g pro Liter Katalysator beträgt.

4. Verfahren nach einem der Ansprüche 1 bis 3, **dadurch gekennzeichnet, dass** im Katalysator der ersten Zone der Gehalt an porösem Träger zwischen 200 und 350 g pro Liter Katalysator, der Gehalt an Cer zwischen 2 und 15 Gew.-%, bezogen auf den porösen Träger, der Gehalt an Eisen zwischen 0,1 und 2 Gew.-%, bezogen auf den porösen Träger, der Gehalt an Zirconium zwischen 2 und 15 Gew.-%, bezogen auf den porösen Träger; und der Gehalt an Palladium und/oder Platin zwischen 5 und 20 g pro Liter Katalysator beträgt.

5. Verfahren nach einem der Ansprüche 1 bis 4, **dadurch gekennzeichnet, dass** im Katalysator der ersten Zone der poröse Träger auf der Basis feuerfesten anorganischen Oxids gewählt ist aus der Gruppe, die gebildet wird durch Alpha-, Delta-, Eta-, Gamma-, Kappa-, Chi-, Rho-, Theta-, Aluminiumoxid, Siliziumoxid, Siliziumoxide-Aluminiumoxide, Titanoxid, Zircon und deren Gemische.

6. Verfahren nach einem der Ansprüche 1 bis 5, **dadurch gekennzeichnet, dass** im Katalysator der ersten Zone dieser poröse Träger eine spezifische Oberfläche zwischen 20 und 250 m²/g aufweist.

7. Verfahren nach einem der Ansprüche 1 bis 6, **dadurch gekennzeichnet, dass** im Katalysator der ersten Zone dieser Träger thermisch durch Einführung wenigstens einer Verbindung stabilisiert wurde, die aus der durch die Oxide der dreiwertigen Seltenen Erden, die Oxide der Erdalkalimetalle und Siliziumoxid gebildeten Gruppe gewählt ist.

8. Verfahren nach Anspruch 7, **dadurch gekennzeichnet**, das im Katalysator der ersten Zone der Träger thermisch durch Siliziumoxid bei einem Gehalt von 1 bis 6 Gew.-%, bezogen auf diesen porösen Träger, stabilisiert wurde.

9. Verfahren nach einem der Ansprüche 1 bis 8, **dadurch gekennzeichnet, dass** im Katalysator der ersten Zone dieses Substrat metallisch oder keramisch ist.

10. Verfahren nach einem der Ansprüche 1 bis 9, **dadurch gekennzeichnet, dass** im Katalysator der zweiten Zone dieses Oxid der Formel A₁₋ₓB_{y}C_{z}Al_{12-y-z}O19-6 entspricht, in der A wenigstens ein Element mit der Wertigkeit X, gewählt aus der durch Barium, Strontium und die Seltenen Erden gebildeten Gruppe darstellt; B wenigstens ein Element der Wertigkeit Y, gewählt aus der durch Mn, Co und Fe gebildeten Gruppe darstellt; C wenigstens ein Element, gewählt aus der Mg und Zn gebildeten Gruppe darstellt; x einen Wert zwischen 0 und 0,25 hat, y einen Wert von 0,5 bis 3 und z einen Wert von 0,01 bis 3 hat, wobei die Summe y + z einen Maximalwert von 4 und 6 einen Wert hat, der, bestimmt als Funktion der jeweiligen Wertigkeiten X und Y der Elemente A und B und der Werte x, y und z, gleich 1-1/2 {(1-x)X + yY-3 y-z} ist.

11. Verfahren nach Anspruch 10, **dadurch gekennzeichnet, dass** in diesem Oxid das Atomverhältnis von A zur Summe von B + C + Al etwa 0,06 bis 0,1 beträgt.

12. Verfahren nach einem der Ansprüche 10 und 11, **dadurch gekennzeichnet, dass** in diesem Oxid die Werte y und z jeweils zwischen 0,5 und 2 und zwischen 0,01 und 2 liegen.

13. Verfahren nach einem der Ansprüche 1 bis 12, **dadurch gekennzeichnet, dass** im Katalysator der zweiten Zone das Element A Lanthan oder Barium, das Element B Mangan und das Element C Magnesium ist.

14. Verfahren nach einem der Ansprüche 1 bis 13, **dadurch gekennzeichnet, dass** im Katalysator der zweiten Zone dieses Oxid ein lamellares Hexaaluminat ist, in welchem das Element B und/oder das Element C in die kristalline Struktur eingebaut sind.

15. Verfahren nach einem der Ansprüche 1 bis 14, **dadurch gekennzeichnet, dass** im Katalysator der zweiten Zone dieses Oxid ein metallisches oder keramisches Substrat als Träger hat.

16. Verfahren nach Anspruch 15, bei dem das Substrat ein Material monolithischer Form mit Zellstruktur ist.

17. Verfahren nach einem der Ansprüche 1 bis 14, **dadurch gekennzeichnet, dass** im Katalysator der zweiten Zone dieses Oxid in monolithische Gestalt von zellularer Struktur geformt wird.

18. Verfahren nach einem der Ansprüche 1 bis 17, **dadurch gekennzeichnet, dass** im Katalysator der zweiten Zone dieses Oxid ein Metall der Gruppe des Platins enthält, das auf die Oberfläche abgeschieden oder im Zuge der Herstellung eingebaut wurde.

## Claims

1. A process for the catalytic combustion of at least one fuel comprising the use of a plurality of successive catalytic zones, said process being **characterized in that** at least one of the first catalytic zones includes a catalyst comprising a monolithic substrate, a porous support based on a refractory inorganic oxide and an active phase comprising cerium, iron and optionally zirconium, also at least one metal selected from the group formed by palladium and platinum; and **in that** at least one of the subsequent catalytic zones includes an active phase comprising at least one oxide of:
• at least one element A selected from the group formed by barium, strontium and rare-earth elements;
• at least one element B selected from the group formed by manganese, cobalt and iron;
• at least one element C selected from the group formed by magnesium and zinc; and
• aluminium.

2. A process according to claim 1, **characterized in that** it comprises the use of two catalytic zones.

3. A process according to claim 1 or claim 2, **characterized in that** in the catalyst for the first zone, the amount of porous support is in the range 100 to 400 g per litre of catalyst, the cerium content is in the range 0.3% to 20% by weight with respect to the porous support; the iron content is in the range 0.01% to 3.5% by weight with respect to the porous support; the zirconium content is in the range 0 to 20% by weight with respect to the porous support; and the palladium and/or platinum content is more than 3 g per litre of catalyst.

4. A process according to any one of claims 1 to 3, **characterized in that** in the catalyst for the first zone, the amount of porous support is in the range 200 to 350 g per litre of catalyst, the cerium content is in the range 2% to 15% by weight with respect to the porous support; the iron content is in the range 0.1% to 2% by weight with respect to the porous support; the zirconium content is in the range 2% to 15% by weight with respect to the porous support; and the palladium and/or platinum content is in the range 5 to 20 g per litre of catalyst.

5. A process according to any one of claims 1 to 4, **characterized in that**, in the catalyst for the first zone, the porous support based on a refractory inorganic oxide is selected from the group formed by alpha alumina, delta alumina, eta alumina, gamma alumina, kappa alumina, khi alumina, rho alumina, theta alumina, silica, silica-aluminas, titanium oxide, zirconia and mixtures thereof.

6. A process according to any one of claims 1 to 5, **characterized in that** in the catalyst for the first zone, said porous support has a specific surface area which is in the range 20 m²/g to 250 m²/g.

7. A process according to any one of claims 1 to 6, **characterized in that** in the catalyst for the first zone, said support has been thermally stabilised by introducing at least one compound selected from the group formed by the oxides of trivalent rare-earths, the oxides of alkaline-earth metals, and silica.

8. A process according to claim 7, **characterized in that** in the catalyst for the first zone, said support has been thermally stabilised with silica in an amount of 1% to 6% by weight with respect to said porous support.

9. A process according to any one of claims 1 to 8, **characterized in that** in the catalyst for the first zone, said substrate is metallic or ceramic.

10. A process according to any one of claims 1 to 9, **characterized in that**, in the catalyst for the second zone, said oxide has the formula A₁₋ₓB_{y}C_{z}Al_{12-y-z}O_{19-δ}, where A is at least one element with valency X selected from the group formed by barium, strontium and rare-earths; B is at least one element with valency Y selected from the group formed by Mn, Co and Fe; C is at least one element selected from the group formed by Mg and Zn; x is 0 to 0.25, y is 0.5 to 3; and z is 0.01 to 3; the sum y+z having a maximum value of 4 and δ having a value which, determined as a function of the respective valencies X and Y of elements A and B and the values of x, y and z, is equal to 1-½{(1-x)X + yY-3 y-z}.

11. A process according to claim 10, **characterized in that** in said oxide, the atomic ratio of A to the sum B + C + Al is about 0.06 to 0.1.

12. A process according to claim 10 or claim 11, **characterized in that** in said oxide, the values of y and z are respectively in the range 0.5 to 2 and 0.01 to 2.

13. A process according to any one of claims 1 to 12, **characterized in that** in the catalyst for the second zone, element A is lanthanum or barium, element B is manganese and element C is magnesium.

14. A process according to any one of claims 1 to 13, **characterized in that** in the catalyst for the second zone, said oxide is a lamellar hexaaluminate in which element B and/or element C are incorporated in the crystalline structure.

15. A process according to any one of claims 1 to 14, **characterized in that** in the catalyst for the second zone, said oxide is supported on a metallic or ceramic substrate.

16. A process according to claim 15, in which the substrate is a material with a monolithic form and a cellular structure.

17. A process according to any one of claims 1 to 14, **characterized in that** in the catalyst for the second zone, said oxide is in the form of a monolith with a cellular structure.

18. A process according to any one of claims 1 to 17, **characterized in that** in the catalyst for the second zone, said oxide contains a platinum group metal deposited on its surface or incorporated during preparation.
